# EUROPÄISCHE PATENTSCHRIFT

(11) **EP 0 652 557 B1**
(45) Veröffentlichungstag und Bekanntmachung des Hinweises auf die Patenterteilung: **16.05.2001**
(21) Anmeldenummer: 94203151.9
(22) Anmeldetag: 28.10.1994
(51) Int. Cl.: G11B 15/60

(54) **Magnetbandkassettengerät mit einer Bandführung für ein Magnetband im Bereich der Magnetspalten eines Magnetkopfes des Gerätes**
Magnetic tape cassette apparatus with a tape guide for a magnetic tape near the magnetic gaps of a magnetic head of the apparatus
Appareil à cassette à bande magnétique avec un guide de bande pour une bande magnétique près des entrefers magnétiques d'une tête magnétique de l'appareil

(30) Priorität: 05.11.1993 DE 4337812
(43) Veröffentlichungstag der Anmeldung: 10.05.1995
(73) Patentinhaber: Philips Corporate Intellectual Property GmbH, 52064 Aachen (DE); Koninklijke Philips Electronics N.V., 5621 BA Eindhoven (NL)
(72) Erfinder: Kunze, Norbert, c/o Philips Corp.Intel.Prop. GmbH, D-52064 Aachen (DE); Müller, Dieter, c/o Philips Corp.Intel.Prop.GmbH, D-52064 Aachen (DE)
(74) Vertreter: Volmer, Georg, Dipl.-Ing.

(56) Entgegenhaltungen:
- EP-A- 0 350 054
- EP-A- 0 442 512
- GB-A- 2 134 691
- US-A- 3 756 610

## Beschreibung

Die Erfindung bezieht sich auf ein Magnetbandkassettengerät, und eine Magnetkopf-Bandführungseinheit gemäß den Oberbegriffen der Ansprüche 1 und 4. Die entsprechenden Merkmale sind aus GB 2 134 691 bekannt.

Eine derartige Bandführung für ein Magnetband im Bereich der Informationsspuren eines Magnetkopfes eines Magnetbandkassettengerätes ist aus der US-PS 52 02 808 bekannt. Es ist dabei ein Kunststoffspritzteil vorgesehen, das eine Halterung für einen Magnetkopf und in unmittelbarer Nachbarschaft des Magnetkopf-Kopfspiegels in Durchzugsrichtung beiderseits des Kopfspiegels innere Bandführungselemente aufweist. Darüber hinaus ist vorgesehen, daß an dem selben Kunststoffspritzteil auch im Abstand von den am Magnetkopf befindlichen Bandführungselementen weitere äußere Bandführungselemente vorgesehen sind, die eine Führung des Magnetbandes beiderseits des Magnetkopfes auf größerer Länge sicherstellen.

Die einzelnen Bandführungselemente sind gabelförmig ausgebildet und weisen dementsprechend Führungsschenkel auf, an denen das Band entlang laufen kann. Bei jedem der Bandführungselemente weist jeweils ein Führungsschenkel eine vertikal zur Banddurchzugsbahn verlaufende Referenz- oder Anlagefläche auf, während die Anlagefläche des anderen Führungsschenkels gegenüber der Durchzugsbahn schräg nach außen geneigt ist. Alle Anlageflächen der Bandführungselemente sind so eingestellt, daß ein Rand des Magnetbandes an allen vertikalen Anschlagflächen anliegend vorbei läuft, wenn der Kopf richtig eingestellt ist.

Aus der US-PS 37 56 610 ist auch eine Magnetbandführung bekannt, die ebenfalls Paare von Führungselementen aufweist. Diese Paare von Führungselementen sind auf Abstand beiderseits des Magnetkkopfes angeordnet. Jedes Paar von Bandführungselementen hat ein Teilelement mit einer Führungskante, an der das Magnetband mit einem seiner Längsränder, und ein Teilelement mit einer Führungskante, an der das Magnetband mit dem anderen seiner Längsränder entlang läuft. Der Abstand der Führungskanten quer zur Bandtransportrichtung beträgt Bₘᵢₙ. Das ist die der Norm entsprechende geringste Magnetbandbreite. Bei allen Magnetbandbreiten größer als Bₘᵢₙ wird das Magnetband zwischen den dicht benachbarten Teilelementen eines Paares von Bandführungselementen an den Rändern wegen eines scharfen Versatzes der Führung verknickt. Die Magnetbandränder sind dadurch einem deutlichen Verschleiß unterworfen.

Es ist Aufgabe der Erfindung, ein Magnetbandkassettengerät mit einer Bandführung der eingangs erwähnten Art zu schaffen, bei der alle in der zulässigen Toleranz befindlichen Bandbreiten einwandfrei gegenüber den Magnetspalten des Kopfes geführt werden.

Die gestellte Aufgabe ist erfindungsgemäß dadurch durch die kennzeichnenden Merkmale der Ansprüche 1 und 4 gelöst.

Bei Durchzug eines Magnetbandes mit einer der Norm entsprechend minimalen Bandbreite wird das Magnetband -damit in Transportrichtung ohne Randverformung hin und her abwechselnd am einen Bandrand und am anderen Bandrand geführt. Bei zunehmender Bandbreite geht die Bandführung zu einer Vollführung an allen Führungssschenkeln über, wobei die Bandränder etwas verformt werden. Da die Führungen aber deutlich auf Abstand angeordnet sind, kommt es zu keinen Zerquetschungen. Es erfolgt eine Lageorientierung des Magnetbandes, die ständig zu einer optimalen Vorbeiführung des Magnetbandes an den Magnetspalten des Kopfes führt.

Nach einer weiteren Ausgestaltung der Erfindung ist vorgesehen, daß die Anlageflächen der Führungsschenkel am Magnetkopf, an denen der Rand des Magnetbandes anliegend entlang läuft, von der in Durchzugsrichtung verlaufenden Mittellinie der Magnetspalten des Magnetkopfes einen Abstand haben, der der halben Bandbreite des Magnetbandes entspricht, mit dem der Magnetkopf zu den Bandführungselementen ausgerichtet ist. Bei der mittleren und minimalen maximalen Bandbreite wird das Magnetband damit optimal über die Magnetspalten des Magnetkopfes hinweg geführt.

Die außen gelegenen Bandführungselemente weisen einen Abstand von ca. 8 mm von den innen gelegenen Bandführungseslementen auf. Die Belastung der Bandränder wird dadurch gering gehalten, auch bei maximaler Bandbreite.

Nach einer weiteren Ausgestaltung der Erfindung ist vorgesehen, daß alle vier Bandführungselemente und eine positionierende Halterung für den Magnetkopf als einstückiges Kunststoffspritzteil ausgebildet sind und eine Bandführungseinheit bilden. Die gewünschte gegenseitige Zuordnung aller Bandführungselemente und des Tonkopfes ist auf diese Weise optimal gesichert.

An sich ist es aus der US-PS 51 34 536 bekannt, alle Bandführungselemente und eine Halterung für den Magnetkopf in einem einstückigen Spritzteil zur Verfügung zu stellen. Die andere Art der Bandführung führt aber zu anderen Betriebsergebnissen.

Die Erfindung wird anhand der Zeichnung näher erläutert. Es zeigen:
Fig. 1 schematisch einen Ausschnitt aus dem Kopfträger eines Magnetbandkassettengerätes, auf dem eine Magnetkopf/Bandführungseinheit, beispielsweise durch Aufklicken, in genau vorgegebener Lage befestigt ist bei minimaler Bandbreite Bₘᵢₙ,
Fig. 2 einen Ausschnitt aus der Einheit nach Fig. 1 mit einem Magnetband maximaler Bandbreite.

An der Magnetkopf/Bandführungseinheit 3 befindet sich ein Rahmen 5, in den ein Magnetkopf 7 einklebbar ist. Weiterhin befinden sich an der Magnetkopf/Bandführungseinheit 3 vier Bandführungselemente 9a, 9b, 9c und 9d. Alle vier Bandführungselemente sind gabelförmig ausgebildet mit je zwei Führungsschenkeln 9a₁, 9a₂, 9b₁, 9b₂, 9c₁, 9c₂, 9d₁, 9d₂. Alle Führungsschenkel haben Anlageflächen 9e, die senkrecht zu einer Durchzugsbahn oder Durchzugsebene 11a eines Magnetbandes 11 verlaufen.

Die Abstände zwischen den Anlageflächen 9e der Bandführungselemente 9a; 9b; 9c; 9d für das Magnetband 11 sind alle bemessen auf die maximal zulässige Breite Bₘₐₓ eines Magnetbandes 11. Diese maximale Breite Bₘₐₓ beträgt 3,81 mm. Abweichungen von dieser maximalen Breite Bₘₐₓ von 3,81 mm sind nur nach unten zulässig um 0,05 mm. Die Mindestbandbreite Bₘᵢₙ des Magnetbandes beträgt damit 3,76 mm. In der Zeichnung sind die Abstände Bₘᵢₙ und Bₘₐₓ übertrieben groß dargestellt.

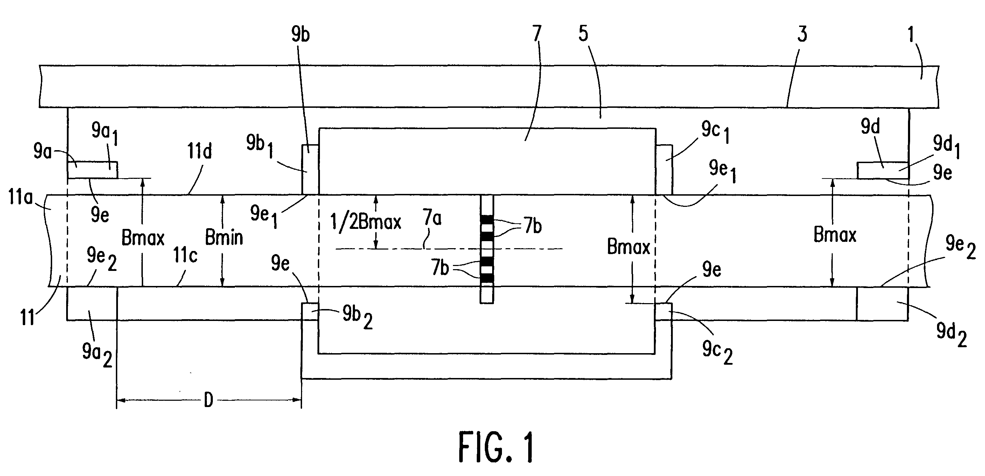

Die Bandbreite entspricht bei der Darstellung nach Fig. 1 Bₘᵢₙ.

Der Banddurchzug ist so eingestellt, daß der Rand 11d des Magnetbandes 11 stets an den als Referenzkanten wirkenden, dem Magnetkopf benachbarten Anlageflächen 9e₁ bei minimaler Bandbreite Bₘᵢₙ anliegt. Gleichzeitig liegt in Fig. 1 der Rand 11c des Magnetbandes 11 bei minimaler Bandbreite Bₘᵢₙ an den als Referenzkante dienenden, außen liegenden Anlageflächen 9e₂ an. In der Zeichnung sind die Bandbreiten Bₘₐₓ und Bₘᵢₙ übertrieben groß dargestellt. In Wirklichkeit sind diese Unterschiede optisch kaum zu erkennen.

Der Lage der Magnetspalte 7b zu den Anlageflächen kommt eine besondere Bedeutung zu. Deshalb ist vorgesehen, daß die Anlageflächen (9e₁) der Führungsschenkel (9b₁, 9c₁) am Magnetkopf (7), an denen der Rand (11d) des Magnetbandes (11) anliegend entlang läuft, von der in Durchzugsrichtung verlaufenden Mittellinie (7a) der Magnetspalten (7c) des Magnetkopfes (7) einen Abstand haben, der der halben Bandbreite (Bₘₐₓ) des Magnetbandes (11) entspricht, mit dem der Magnetkopf (7) zu den Bandführungselementen (9) ausgerichtet ist.

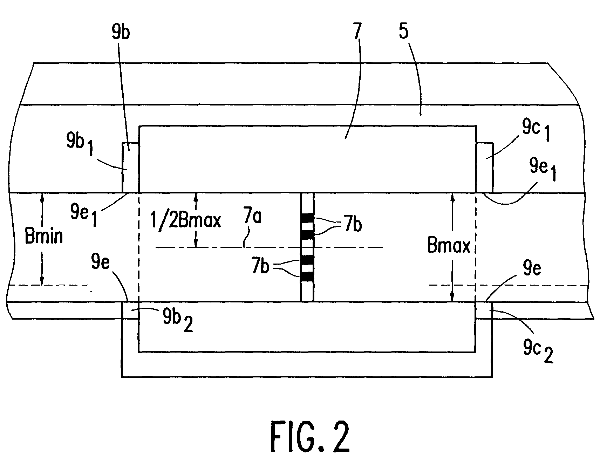

In Fig. 2 ist dargestellt, wie bei einer maximalen Breite Bₘₐₓ des Magnetbandes 11 die Magnetspalten 7b auf die Mitte des Magnetbandes 11 aufgerichtet sind. Bei einer Veränderung der Bandbreite zwischen Bₘₐₓ und Bₘᵢₙ ergeben sich nur vernachlässigbare Verschiebungen der Magnetspuren des Bandes gegenüber den Magnetspalten 7b des Kopfes. Der Abstand D der äußeren Bandführungselemente 9d von den inneren Bandführungselementen 9a beträgt ca. 8 mm. Dieser Abstand wird im wesentlichen bestimmt von nicht dargestellten Fangstiftöffnungen an der Kassettenvorderwand, die sich zwischen der nicht daragestellten Einschuböffnung für den Magnetkopf und den ebenfalls nicht dargestellten Einschuböffnungen für die Andruckrollen befinden. In diese Fangstiftöffnungen tauchen die äußeren Bandführungselemente 9d ein.

## Patentansprüche

1. Magnetbandkassettengerät mit einer Bandführung für ein Magnetband - mit einer vorgegebenen minimalen und maximalen Bandbreite (Bₘᵢₙ, Bₘₐₓ) - mit paarweise angeordneten, das Magnetband zwischen sich und relativ zu einem Magnetkopf bzw. dessen Magnetspalten führenden Bandführungselementen (9), wobei ein erstes Paar von Bandführungselementen (9b, 9c) beiderseits des Magnetkopfes in dessen unmittelbarer Nähe und ein zweites Paar (9a, 9d), weiter außen liegend, auf Abstand vom Magnetkopf und den ihm benachbarten Bandführungselement vorgesehen sind und wobei die Bandführungselemente gabelförmig ausgebildet sind mit vorstehenden, die Durchzugsbahn des Magnetbandes begrenzenden Führungsschenkeln,
dadurch gekennzeichnet,
dass der gegenseitige Abstand der Führungsschenkel (9a) aller Bandführungselemente (9) jeweils auf die maximale Bandbreite (Bₘₐₓ) des Magnetbandes eingestellt ist und dass die Lage der Führungsschenkel (9b_{1,2}, 9c_{1,2}) des ersten Paares der Bandführungselemente (9b, 9c) gegenüber den Bandrändern am Magnetkopf (7) einerseits und den auf Abstand weiter außen liegenden Bandführungselementen (9a, 9d) andererseits so eingestellt sind, dass das Magnetband (11) in Transportrichtung bei minimaler Bandbreite (Bₘᵢₙ) mit seinem einen Rand (11d) an Führungsschenkeln (9b₁, 9c₁) des ersten Paares von Bandführungselementen am Magnetkopf (7) und mit seinem anderen Rand (11c) an Führungsschenkeln (9a₂, 9d₂) des weiter außen liegenden zweiten Paares von Führungselementen (9a, 9d) anliegt und dass beiderseits des Magnetkopfes jeweils die außen gelegenen Bandführungselemente (9a, 9d) bei einer Magnetbandbreite zwischen 3,76 mm und 3,81 mm einen Abstand (D) von ca. 8 mm von den jeweils innen gelegenen Bandführungselementen (9b, 9c) aufweisen, innerhalb dessen das Band nicht geführt wird.

2. Magnetbandkassettengerät nach Anspruch 1,
dadurch gekennzeichnet,
dass die Anlageflächen (9e₁) der Führungsschenkel (9b₁, 9c₁) am Magnetkopf (7), an denen der Rand (11d) des Magnetbandes (11) anliegend entlang läuft, von der in Durchzugsrichtung verlaufenden Mittellinie (7a) der Magnetspalten (7c) des Magnetkopfes (7) einen Abstand haben, der der halben Bandbreite (Bₘₐₓ) des Magnetbandes (11) entspricht, mit dem der Magnetkopf (7) zu den Bandführungselementen (9) ausgerichtet ist.

3. Magnetbandkassettengerät nach einem der Ansprüche 1 bis 2,
dadurch gekennzeichnet,
dass alle Bandführungselemente (9) und eine positionierende Halterung für den Magnetkopf (7) an einem einstückig gebildeten Kunststoffspritzteil ausgebildet sind.

4. Magnetkopf-Bandführungseinheit für ein Magnetbandkassettengerät mit einer Bandführung für ein Magnetband - mit einer vorgegebenen minimalen und maximalen Bandbreite (Bₘᵢₙ, Bₘₐₓ) - mit paarweise angeordneten, das Magnetband zwischen sich und relativ zu einem Magnetkopf bzw. dessen Magnetspalten führenden Bandführungselementen (9), wobei ein erstes Paar von Bandführungselementen (9b, 9c) beiderseits des Magnetkopfes in dessen unmittelbarer Nähe und ein zweites Paar (9a, 9d), weiter außen liegend, auf Abstand vom Magnetkopf und den ihm benachbarten Bandführungselement vorgesehen sind und wobei die Bandführungselemente gabelförmig ausgebildet sind mit vorstehenden, die Durchzugsbahn des Magnetbandes begrenzenden Führungsschenkeln,
dadurch gekennzeichnet,
dass der gegenseitige Abstand der Führungsschenkel (9a) aller Bandführungselemente (9) jeweils auf die maximale Bandbreite (Bₘₐₓ) des Magnetbandes eingestellt ist und dass die Lage der Führungsschenkel (9b_{1,2}, 9c_{1,2}) des ersten Paares der Bandführungselemente (9b, 9c) gegenüber den Bandrändern am Magnetkopf (7) einerseits und den auf Abstand weiter außen liegenden Bandführungselementen (9a, 9d) andererseits so eingestellt sind, dass das Magnetband (11) in Transportrichtung bei minimaler Bandbreite (Bₘᵢₙ) mit seinem einen Rand (11d) an Führungsschenkeln (9b₁, 9c₁) des ersten Paares von Bandführungselementen am Magnetkopf (7) und mit seinem anderen Rand (11c) an Führungsschenkeln (9a₂, 9d₂) des weiter außen liegenden zweiten Paares von Führungselementen (9a, 9d) anliegt und dass beiderseits des Magnetkopfes jeweils die außen gelegenen Bandführungselemente (9a, 9d) bei einer Magnetbandbreite zwischen 3,76 mm und 3,81 mm einen Abstand (D) von ca. 8 mm von den jeweils innen gelegenen Bandführungselementen (9b, 9c) aufweisen, innerhalb dessen das Band nicht geführt wird.

## Claims

1. A magnetic-tape-cassette apparatus having tape guide means for a magnetic tape with a given minimum and maximum tape width (Bₘᵢₙ, Bₘₐₓ), comprising tape guide elements (9) arranged in pairs which guide the magnetic tape between them and relative to a magnet head and the head gaps thereof, a first pair of tape guide elements (9b, 9c) being disposed directly adjacent the magnet head on either side thereof and a second pair of tape guide elements (9a, 9d) being disposed further outward and at a distance from the magnet head and the tape guide element adjacent this magnet head, the tape guide elements being fork-shaped and having guide limbs which project so as to bound the transport path of the magnetic tape,
characterized in that
the mutual distance of the guide limbs (9a) of all tape guide elements (9) is dimensioned for the maximum tape width (Bₘₐₓ) of the magnetic tape, and in that the positions of the guide limbs (9b_{1,2}, 9c_{1,2}) of the first pair of tape guide elements (9b, 9c) with respect to the tape edges at the magnet head (7) on the one hand and with respect to the further outward tape guide elements (9a, 9d) are adjusted such that, seen in the transport direction and given the case of the minimum tape width (Bₘᵢₙ), the magnetic tape (11) has one edge (11d) in contact with the guide limbs (9b₁, 9c₁) of the first pair of tape guide elements at the magnet head (7) and the other edge (11c) in contact with guide limbs (9a₂, 9d₂) of the further outward, second pair of tape guide elements (9a, 9d), and in that on either side of the magnet head the respective outwardly situated tape guide elements (9a, 9d) have a distance (D) of approximately 8 mm to the respective inwardly situated tape guide elements (b, 9c), within which distance (D) the tape is not guided, in the case of a magnetic tape width of between 3.76 and 3.81 mm.

2. A magnetic-tape-cassette apparatus as claimed in Claim 1,
characterized in that
the contact faces (9e₁) of those guide limbs (9b₁, 9c₁) at the magnet head (7) with which the edge (11d) of the magnetic tape (11) is in contact while the tape is moving past have a distance from the central axis (7a) of the magnet gaps (7c) of the magnet head (7), said axis (7a) extending in the transport direction, corresponding to half the tape width (Bₘₐₓ) of the magnetic tape (11) for which the magnet head (7) is aligned relative to the tape guide elements (9).

3. A magnetic-tape-cassette apparatus as claimed in any one of the Claims 1 and 2,
characterized in that
all tape guide elements (9) and a positioning holder for the magnet head (7) are constructed as one integral injection-molded piece..

4. A magnetic-head/tape guide unit for a magnetic-tape-cassette apparatus having tape guide means for a magnetic tape with a given minimum and maximum tape width (Bₘᵢₙ, Bₘₐₓ), comprising tape guide elements (9) arranged in pairs which guide the magnetic tape between them and relative to a magnet head and the head gaps thereof, a first pair of tape guide elements (9b, 9c) being disposed directly adjacent the magnet head on either side thereof and a second pair of tape guide elements (9a, 9d) being disposed further outward and at a distance from the magnet head and the tape guide element adjacent this magnet head, the tape guide elements being fork-shaped and having guide limbs which project so as to bound the transport path of the magnetic tape,
characterized in that
the mutual distance of the guide limbs (9a) of all tape guide elements (9) is dimensioned for the maximum tape width (Bₘₐₓ) of the magnetic tape, and in that the positions of the guide limbs (9b_{1,2}, 9c_{1,2}) of the first pair of tape guide elements (9b, 9c) with respect to the tape edges at the magnet head (7) on the one hand and with respect to the further outward tape guide elements (9a, 9d) are adjusted such that, seen in the transport direction and given the case of the minimum tape width (Bₘᵢₙ), the magnetic tape (11) has one edge (11d) in contact with the guide limbs (9b₁, 9c₁) of the first pair of tape guide elements at the magnet head (7) and the other edge (11c) in contact with guide limbs (9a₂, 9d₂) of the further outward, second pair of tape guide elements (9a, 9d), and in that on either side of the magnet head the respective outwardly situated tape guide elements (9a, 9d) have a distance (D) of approximately 8 mm to the respective inwardly situated tape guide elements (b, 9c), within which distance (D) the tape is not guided, in the case of a magnetic tape width of between 3.76 and 3.81 mm.

## Revendications

1. Appareil à cassette de bande magnétique équipé d'un guide de bande pour une bande magnétique d'une largeur de bande prédéterminée minimale et maximale (Bₘᵢₙ, Bₘₐₓ), comportant des éléments guide-bande (9) agencés par paires et guidant la bande magnétique entre eux et par rapport à une tête magnétique ou aux entrefers magnétiques de celle-ci, une première paire d'éléments guide-bande (9b, 9c) située de part et d'autre de la tête magnétique au voisinage direct de celle-ci et une deuxième paire (9a, 9d) située davantage vers l'extérieur, à distance de la tête magnétique et de l'élément guide-bande qui lui est voisin étant prévues, les éléments guide-bande se présentant sous la forme d'étriers comportant des ailes de guidage saillantes qui délimitent le trajet de défilement de la bande magnétique,
caractérisé en ce que :
la distance mutuelle des ailes de guidage (9a) de tous les éléments guide-bande (9) est réglée respectivement sur la largeur de bande maximale (Bₘₐₓ) de la bande magnétique et en ce que la position des ailes de guidage (9b_{1,2}, 9c_{1,2}) de la première paire des éléments guide-bande (9b, 9c) est réglée par rapport aux bords de la bande sur la tête magnétique (7), d'une part, et aux éléments guide-bande (9a, 9d) disposés davantage vers l'extérieur, d'autre part, de telle sorte que la bande magnétique (11) s'applique, dans la direction de transport, pour une largeur de bande minimale (Bₘᵢₙ), par son premier bord (11d) sur les ailes de guidage (9b₁, 9c₁) de la première paire d'éléments guide-bande sur la tête magnétique (7) et par son autre bord (11c) sur les ailes de guidage (9a₂, 9d₂) de la seconde paire d'éléments de guidage (9a, 9d) située davantage vers l'extérieur et les éléments guide-bande (9a, 9d) situés à l'extérieur de part et d'autre de la tête magnétique présentent, pour une largeur de bande magnétique entre 3,76 mm et 3,81 mm, une distance (D) d'environ 8 mm depuis les éléments guide-bande (9b, 9c) respectivement situés à l'intérieur, dans laquelle la bande n'est pas guidée.

2. Appareil à cassette à bande magnétique selon la revendication 1,
caractérisé en ce que :
les surfaces de contact (9e₁) des ailes de guidage (9b₁, 9c₁) sur la tête magnétique (7), sur lesquelles le bord (11d) de la bande magnétique (11) s'applique lors de son défilement, ont par rapport à la ligne médiane (7a) - s'étendant dans la direction de défilement - des entrefers magnétiques (C) de la tête magnétique (7), une distance qui correspond à la demi-largeur de bande (Bₘₐₓ) de la bande magnétique (11), avec laquelle la tête magnétique (7) est alignée sur les éléments guide-bande (9).

3. Appareil à cassette à bande magnétique selon l'une quelconque des revendications 1 et 2,
caractérisé en ce que :
tous les éléments guide-bande (9) et un support de positionnement pour la tête magnétique (7) se présentent sous la forme d'une pièce de matière synthétique moulée par injection d'un seul bloc.

4. Unité guide-bande à tête magnétique pour un appareil à cassette de bande magnétique équipé d'un guide de bande pour une bande magnétique d'une largeur de bande prédéterminée minimale et maximale (Bₘᵢₙ, Bₘₐₓ), comportant des éléments guide-bande (9) agencés par paires et guidant la bande magnétique entre eux et par rapport à une tête magnétique ou aux entrefers magnétiques de celle-ci, une première paire d'éléments guide-bande (9b, 9c) située de part et d'autre de la tête magnétique au voisinage direct de celle-ci et une deuxième paire (9a, 9d) située davantage vers l'extérieur, à distance de la tête magnétique et de l'élément guide-bande qui lui est voisin étant prévues, les éléments guide-bande se présentant sous la forme d'étriers comportant des ailes de guidage saillantes délimitant le trajet de défilement de la bande magnétique,
caractérisé en ce que :
la distance mutuelle des ailes de guidage (9a) de tous les éléments guide-bande (9) est réglée respectivement sur la largeur de bande maximale (Bₘₐₓ) de la bande magnétique et la position des ailes de guidage (9b_{1,2}, 9c_{1,2}) de la première paire des éléments guide-bande (9b, 9c) est réglée par rapport aux bords de la bande sur la tête magnétique (7), d'une part, et aux éléments guide-bande (9a, 9d) disposés davantage vers l'extérieur, d'autre part, de telle sorte que la bande magnétique (11) s'applique, dans la direction de transport, pour une largeur de bande minimale (Bₘᵢₙ), par son premier bord (11d) sur les ailes de guidage (9b₁, 9c₁) de la première paire d'éléments guide-bande sur la tête magnétique (7) et par son autre bord (11c) sur les ailes de guidage (9a₂, 9d₂) de la seconde paire d'éléments de guidage (9a, 9d) située davantage vers l'extérieur, et en ce que les éléments guide-bande (9a, 9d) situés à l'extérieur de part et d'autre de la tête magnétique présentent, pour une largeur de bande magnétique entre 3,76 mm et 3,81 mm, une distance (D) d'environ 8 mm depuis les éléments guide-bande (9b, 9c) respectivement situés à l'intérieur, dans laquelle la bande n'est pas guidée.
